# EUROPEAN PATENT APPLICATION

(11) **EP 4 694 300 A1**
(43) Date of publication of application: **11.02.2026**
(21) Application number: 23932050.0
(22) Date of filing: 06.04.2023
(51) Int. Cl.: H04W 24/10, H04W 28/06

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); OKUMURA, Mamoru, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2023/014286
(87) International publication number: WO 2024/209639

(57) **Abstract**

A terminal according to one aspect of the present disclosure includes a control section that generates a channel state information (CSI) report including at least one field indicating a measurement result of a reference signal related to a serving cell, and a transmitting section that transmits the CSI report. According to one aspect of the present disclosure, it is possible to appropriately perform CSI reporting related to a plurality of cells.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, switching a serving cell to a cell (additional cell/candidate cell) different from the serving cell (L1/L2 inter-cell mobility (layer 1/layer 2 inter-cell mobility)) by notifying a terminal (user terminals, User Equipment (UE)) of signaling of at least one of layer 1 and layer 2 is under study.

Furthermore, for L1/L2 inter-cell mobility, it is under study that a UE reports a channel state information (CSI) report (which may be referred to as a beam report).

However, when contents of the CSI report received from the UE includes only measurement results related to a beam of only a serving cell or only a candidate cell, a network cannot obtain measurement results of a switch candidate or a switch source, and thus it is difficult to judge cell switching. In this way, unless an appropriate CSI report is reported, there may cause issues such as improvement of communication throughput being suppressed and deterioration in communication quality.

Thus, an object of the present disclosure is to provide a terminal, a radio communication method, and a base station that can appropriately perform CSI reporting related to a plurality of cells.

### Solution to Problem

A terminal according to one aspect of the present disclosure includes a control section that generates a channel state information (CSI) report including at least one field indicating a measurement result of a reference signal related to a serving cell, and a transmitting section that transmits the CSI report. Advantageous Effects of Invention

According to one aspect of the present disclosure, it is possible to appropriately perform CSI measurement or reporting in a plurality of frequencies/cells.

### Brief Description of Drawings

[FIG. 1] FIG. 1A is a diagram to show an example of movement of a UE in Rel. 17. FIG. 1B is a diagram to show an example of movement of a UE in Rel. 18.
[FIG. 2] FIG. 2 is a diagram to show an example of association between a serving cell and a candidate cell.
[FIG. 3] FIG. 3A is a diagram to show a first example of option 2. FIG. 3B is a diagram to show a second example of option 2.
[FIG. 4] FIG. 4 is a diagram to show example 1 of serving cell switching.
[FIG. 5] FIG. 5 is a diagram to show example 2 of the serving cell switching.
[FIG. 6] FIG. 6 is a diagram to show example 3 of the serving cell switching.
[FIG. 7] FIG. 7 is a diagram to show an overview of a CSI report configuration of RRC.
[FIG. 8] FIG. 8 is a diagram to show a part of CSI resource configuration of Rel. 17.
[FIG. 9] FIG. 9 is a diagram to show a part of CSI-SSB resource set of Rel. 17.
[FIG. 10] FIG. 10 is a diagram to show a configuration related to L3 measurements/reporting of Rel. 17.
[FIG. 11] FIG. 11 is a diagram to show an example of RSRP values at a plurality of frequencies.
[FIG. 12] FIG. 12 is a diagram to show an example of CSI-SSB-ResourceSet of option 1 of extension of L1 measurement/report configuration.
[FIG. 13] FIG. 13 is a diagram to show an example of CSI-SSB-ResourceSet of option 2 of extension of the L1 measurement/report configuration.
[FIG. 14] FIG. 14 is a diagram to show an example of CSI report in a plurality of frequencies.
[FIG. 15] FIG. 15 is a diagram to show an example of a CSI measurement/reporting method in a plurality of frequencies.
[FIG. 16] FIG. 16 is a diagram to show an example of contents of a CSI report according to a third embodiment.
[FIG. 17] FIG. 17 is a diagram to show an example of contents of the CSI report according to the third embodiment.
[FIG. 18] FIG. 18 is a diagram to show an example of a schematic structure of a radio communication system according to one embodiment.
[FIG. 19] FIG. 19 is a diagram to show an example of a structure of a base station according to one embodiment.
[FIG. 20] FIG. 20 is a diagram to show an example of a structure of a user terminal according to one embodiment.
[FIG. 21] FIG. 21 is a diagram to show an example of a hardware structure of the base station and the user terminal according to one embodiment.
[FIG. 22] FIG. 22 is a diagram to show an example of a vehicle according to one embodiment.

### Description of Embodiments

### (CSI Reporting (Report))

In NR, a UE measures a channel state by using a specific reference signal (or a resource for the reference signal) and feeds back (reports) channel state information (CSI) to a base station.

The UE may measure the channel state by using a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like.

The CSI-RS resource may include at least one of a non-zero power (NZP) CSI-RS and CSI-Interference Management (IM). The SS/PBCH block is a block including a synchronization signal (for example, a primary synchronization signal (PSS), a secondary synchronization signal (SSS)) and a PBCH (and a corresponding DMRS), and may be referred to as an SS block (SSB) or the like. An SSB index may be given for a time location of an SSB in a half frame.

Note that the CSI may include at least one of a channel quality indicator (CQI), a precoding matrix indicator (PMI), a CSI-RS resource indicator (CRI), an SS/PBCH block resource indicator (SS/PBCH Block Indicator (SSBRI)), a layer indicator (LI), a rank indicator (RI), Layer 1 (L1)-Reference Signal Received Power (RSRP) (reference signal received power in Layer 1), L1-Reference Signal Received Quality (RSRQ), an L1-Signal to Interference plus Noise Ratio (SINR), an L1-Signal to Noise Ratio (SNR), and the like.

The CSI may have a plurality of parts. A first part of the CSI (CSI part 1) may include information with a relatively small number of bits (for example, the RI). A second part of the CSI (CSI part 2) may include information with a relatively large number of bits (for example, CQI) such as information determined based on the CSI part 1.

As a method for feeding back the CSI, (1) periodic CSI (P-CSI) reporting, (2) aperiodic CSI (A (AP)-CSI) reporting, (3) semi-persistent (semi-permanent) CSI reporting (SP-CSI) reporting, and the like are under study.

The UE may be notified of information related to CSI report (which may be referred to as CSI report configuration information) by using higher layer signaling, physical layer signaling (for example, downlink control information (DCI)), or a combination thereof. The CSI report configuration information may be configured using, for example, an RRC information element "CSI-ReportConfig."

The CSI report configuration information may include, for example, information related to reporting periodicity, an offset, and the like, and these may be expressed in a certain time unit (slot unit, subframe unit, symbol unit, and the like). The CSI report configuration information may include a configuration ID (CSI-ReportConfigId). Parameters such as a type of CSI reporting method (whether or not SP-CSI is used, or the like), and the reporting periodicity may be specified by the configuration ID. The CSI report configuration information may include information (CSI-ResourceConfigId) indicating which signal (or which resource for a signal) is used to report measured CSI.

### (TCI, Spatial Relation, QCL)

For NR, control of reception processing (for example, at least one of reception, de-mapping, demodulation, or decoding) and transmission processing (for example, at least one of transmission, mapping, precoding, modulation, or coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, or a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) or a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), or an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), or the like.

The SSB is a signal block including at least one of a primary synchronization signal (PSS), a secondary synchronization signal (SSS), or a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (L1/L2 Inter-Cell Mobility)

As a procedure in which the UE performs UL transmission to one or more cells/transmission/reception points (TRPs), the following scenario 1 or scenario 2 is conceivable. Note that, in the present disclosure, a serving cell may be interpreted as a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI". A non-serving cell, a cell having a different PCI, and an additional cell may be interchangeably interpreted.

### <Scenario 1>

Scenario 1 may support intra-cell mobility of multi-TRP (MTRP) or may not support inter-cell mobility of multi-TRP.
(1) The UE receives, from the serving cell, a configuration of an SSB for beam measurement of a TRP corresponding to a different PCI from the serving cell and a configuration necessary for using radio resources for data transmission and reception, including resources of the different PCI.
(2) The UE performs beam measurement of the TRP corresponding to the different PCI, and reports beam measurement results to the serving cell.
(3) Based on the above report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. The UE is configured with a higher layer parameter related to the PCI of the non-serving cell from the serving cell. Scenario 1 may be applied in Rel. 17, for example.

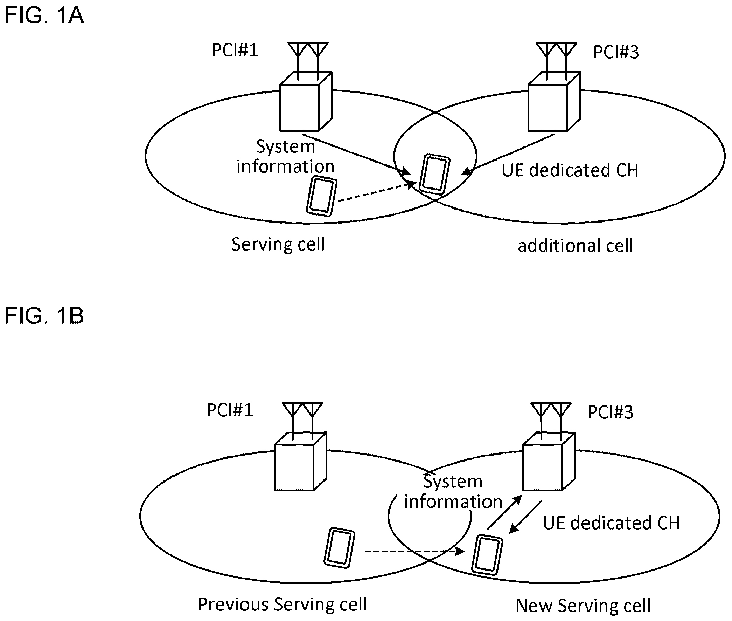

FIG. 1A is a diagram to show an example of movement of the UE in Rel. 17. A case is assumed in which the UE moves from a cell (serving cell) of PCI #1 to a cell (additional cell) (overlapping the serving cell) of PCI #3. In this case, in Rel. 17, the serving cell is not switched by L1/L2. The additional cell is a cell having an additional PCI different from the PCI of the serving cell. The UE can receive/transmit a UE-dedicated channel from the additional cell. The UE needs to be present within coverage of the serving cell in order to receive a UE common channel (for example, system information/paging/short message).

### <Scenario 2>

In scenario 2, L1/L2 inter-cell mobility is applied. In L1/L2 inter-cell mobility, the serving cell can be changed by using a function such as beam control without performing RRC reconfiguration. In other words, transmission and reception to and from an additional cell can be performed without performing handover. For handover, RRC reconnection is required, which generates a period in which data communication cannot be performed, and thus by applying L1/L2 inter-cell mobility that does not require handover, data communication can be continued even at the time of the serving cell change. Scenario 2 may be applied in Rel. 18, for example. In scenario 2, for example, the following procedure is performed.
(1) The UE receives, from the serving cell, a configuration of an SSB for a cell (additional cell) having a different PCI for beam measurement/serving cell change.
(2) The UE performs beam measurement of the cell using the different PCI, and reports measurement results to the serving cell.
(3) The UE may receive a configuration (serving cell configuration) of the cell having the different PCI by higher layer signaling (for example, RRC). In other words, a pre-configuration related to serving cell change may be performed. The configuration may be performed together with or may be performed separately from the configuration in (1).
(4) Based on the above report, the TCI state of the cell having the different PCI may be activated by L1/L2 signaling according to the serving cell change. The TCI state activation and the serving cell change may be separately performed.
(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18.

FIG. 1B is a diagram to show an example of movement of the UE in Rel. 18. In Rel. 18, the serving cell may be switched by L1/L2. The UE may receive/transmit UE dedicated/common channels from/to a new serving cell. The UE may be out of coverage of the previous serving cell.

### (Configuration of Plurality of Candidate Cells)

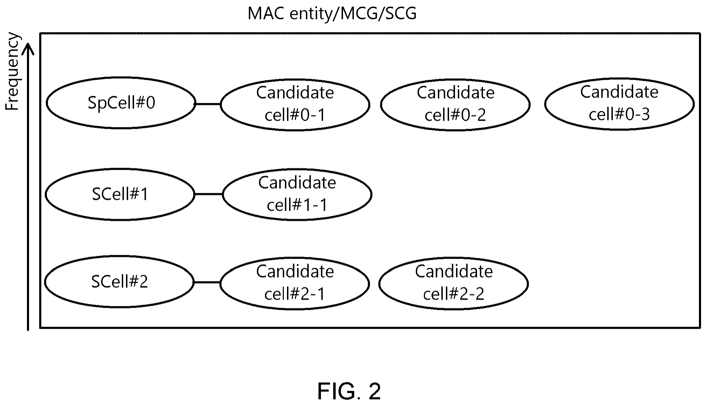

FIG. 2 is a diagram to show an example of association between the serving cell and a candidate cell. Assume that SpCell #0, SCell #1, or SCell #2 is the serving cell. Note that the SpCell means a special cell (including a primary cell (PCell) and a primary secondary cell (PSCell)). The SCell means a secondary cell. SpCell #0 is associated with candidate cell #0-1, candidate cell #0-2, and candidate cell #0-3. SCell #1 is associated with candidate cell #1-1. SCell #2 is associated with candidate cells #2-1 and #2-2. In this manner, one or more candidate cells (candidate serving cells) may be associated with the serving cell.

For configuration of cells as candidates (candidate cells) in a case where the serving cell is changed, options 1 and 2 below are conceivable, for example.

### <Option 1>

As in inter-cell mobility of Rel. 17, information in ServingCellConfig may include information related to a plurality of candidate cells. This case requires that the plurality of candidate cells share the same configuration of a PDCCH/PDSCH/UL or the like as that for the serving cell.

For example, in the inter-cell mobility of Rel. 17, "mimoParam-r17" is added below ServingCellConfig to add PCI configuration information. mimoParam-r17 may include additionalPCI-ToAddModList-r17 as an information list of additional SSBs having PCIs different from a PCI of the serving cell. The same configuration as that for the serving cell may be applied to the candidate cells (additional cells, cells with additionalPCI), except for some information.

### <Option 2>

A plurality of candidate cells may be provided with a full configuration (for example, ServingCellConfig) corresponding to the respective cells, and may be associated with each serving cell by reusing a carrier aggregation (CA) configuration framework. In other words, the candidate cells may not share configuration information with the serving cell, and may be provided with another configuration. The UE is provided with a full configuration for the respective candidate cells, and thus can perform appropriate communication with the candidate cell.

The CA configuration framework can configure an SpCell and add a plurality of SCells, for each cell group. Reusing the CA framework may configure a serving cell and configure a plurality of candidate cells, for each cell group for L1/L2 inter-cell mobility. The candidate cells may be activated/deactivated by a MAC CE. The MAC CE may activate/deactivate TCI information corresponding to the candidate cells to activate/deactivate the candidate cells. It is considered that this method is beneficial for reducing complexity of UE operation.

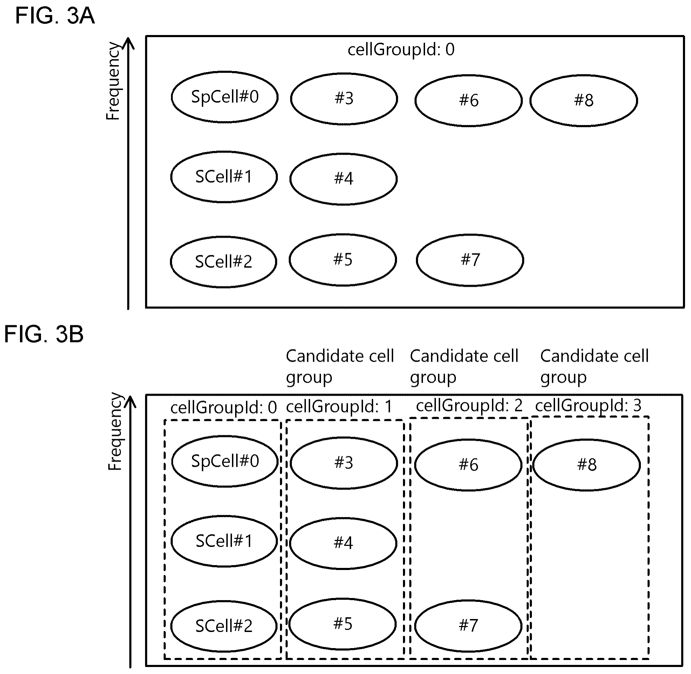

FIG. 3A is a diagram to show a first example of option 2. In the example of FIG. 3A, a common candidate cell pool for cell switching in an MCG/SCG is applied to candidate cells. In other words, the candidate cells are handled as one pool (group) irrespective of a frequency band.

FIG. 3B is a diagram to show a second example of option 2. In the example of FIG. 3B, a plurality of cell groups are configured, and cell group switching can be performed by L1/L2 signaling. Candidate cell(s) is configured for each cell group, and a configuration of each group includes indices of corresponding SpCell and SCell.

### (Signaling for Serving Cell Change Indication)

Implicit or explicit signaling for serving cell change indication for Rel. 18 and later versions is described.

### <Aspect 1>

In Aspect 1, implicit signaling for serving cell change indication will be described.

### {{Option 1-1}}

When a specific control resource set (CORESET) (for example, at least one of CORESET #0, a CORESET with a CH5 Type 0-CSS, or a CORESET with a CH6/CH7/CH8 CSS) is indicated (activated) by a MAC CE, together with one or more TCI states associated with a cell with a PCI different from a PCI of a serving cell (when, for the specific CORESET, one or more TCI states associated with a cell with a PCI different from the PCI of the serving cell are indicated/activated by the MAC CE), the UE may judge to change the serving cell to another cell (cell x, cell having a different PCI). In other words, this activation may implicitly indicate that the serving cell is changed to another cell.

In this case, the UE may update, to the same TCI state as the above-described activated TCI state, a beam for another CORESET ID, another CORESET using CH6/CH7/CH8, or another CORESET using a CSS.

### {{Option 1-2}}

In a case where, when the MAC CE activates/deactivates PDSCH TCI states, all the TCI states activated by the MAC CE are associated with same cell x having a PCI different from the PCI of the serving cell, the UE may judge to change the serving cell to another cell (cell x). In other words, this association may implicitly indicate that the serving cell is changed to another cell.

In a case where this option is applied, when a NW (base station) changes no serving cell, it is necessary that, when the MAC CE activates PDSCH TCI states associated with a cell having a different PCI, a TCI state associated with another cell (for example, a current serving cell or a cell having a second different PCI) be also included in the activation.

### {{Option 1-3}}

In a case where the MAC CE activates/deactivates unified TCI states (corresponding to a unified TCI framework of Rel. 17, for example) and where all the activated unified TCI states are associated with same cell x having a different PCI, the UE may judge to change the serving cell to another cell (cell x). In other words, this association may implicitly indicate that the serving cell is changed to another cell.

### <Aspect 2>

In Aspect 2, explicit signaling for serving cell change indication will be described. Scenario 2 described above is applied to Aspect 2, for example.

### {{Option 2-1}}

An example of the serving cell change indication will be described below. Note that activation/deactivation of a non-serving cell, change of a serving cell, and transmission/reception to/from another cell (non-serving cell) having a physical cell ID different from a physical cell ID of a serving cell may be interchangeably interpreted. Note that, when the non-serving cell is activated, the non-serving cell may be determined as a serving cell, or the current serving cell may be determined to be a non-serving cell.

The UE may receive a new MAC CE used for activation/deactivation of a non-serving cell and including at least one of fields (information) indicating (1) to (3) below corresponding to a non-serving cell. The UE may, when receiving the MAC CE, judge to change the serving cell to another cell (non-serving cell). The UE may control, based on the information, DL/UL signal transmission and reception to and from the non-serving cell. Note that the non-serving cell may be one or a plurality of non-serving cells. In the example to be described below, a MAC CE including a plurality of fields indicating a plurality of non-serving cell indices is applied.
(1) Serving cell ID
(2) BWP ID
(3) Non-serving cell ID used for activation The non-serving cell ID may be replaced with any information (with which the non-serving cell can be identified) corresponding to the non-serving cell.

As an example of (3), any one of (3-1) to (3-5) may be applied, for example.
(3-1) PCI (PCI to be directly used) For example, 10 bits are used.
(3-2) Re-indexing index (new ID) of non-serving cell The new ID may be associated with part of the PCI, and may be configured only for a serving cell and a non-serving cell used by (available to) the UE. The new ID can reduce the number of bits more than the PCI does.
(3-3) CSI report configuration ID (CSI-ReportConfigId) (when CSI-ReportConfig corresponds to one or a plurality of non-serving cells)
(3-4) CSI resource configuration ID (CSI-ResourceConfigId) (when CSI-ResourceConfigId corresponds to one or a plurality of non-serving cells)
(3-5) Bitmap indicating activation/deactivation of each non-serving cell A size (the number of bits) of the bitmap may be the same as the number of non-serving cells configured in this CC. For example, when the second non-serving cell of three non-serving cells is activated, "010" is configured.

At least one piece of the information included in the MAC CE may be included in DCI. Alternatively, at least one of serving cells activated by the MAC CE may be indicated by the DCI. The MAC CE/DCI may include a field indicating a TCI state/SSB/CSI-RS from a cell having a different PCI, so that the UE can recognize, in a target cell (serving cell after change), a DL beam to be monitored. By using the TCI state / SSB / CSI-RS, the UE may create a beam report (CSI report) and transmit the created report.

### {{Option 2-2}}

The UE may receive a MAC CE obtained by adding a new 1-bit field "C" to an existing MAC CE. The field indicates whether change of a serving cell is performed. The UE may receive the MAC CE, and may judge, based on the field, whether to change the serving cell to another cell.

### {{Option 2-3}}

For the MAC CE in option 2-2, the MAC CE may further include a field indicating a serving cell index / PCI / another ID (the above-described new ID of option 2-1 or the like), or a field for a TCI state / SSB / CSI-RS for a target cell (serving cell after change).

In this manner, indication for serving cell change indication is indicated by a MAC CE/DCI, thereby allowing the UE to appropriately change a serving cell.

### {Example 1 of Serving Cell Switching}

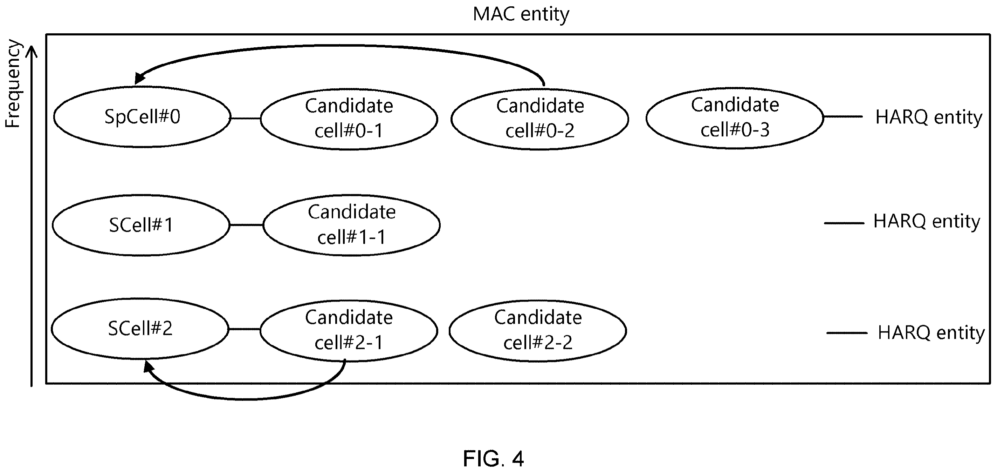

FIG. 4 is a diagram to show example 1 of the serving cell switching. For example, when L1/L2 signaling indicates, for a serving cell "SpCell #0" in an MCG/SCG, that the serving cell is changed to candidate cell #0-2, candidate cell #0-2 becomes a new serving cell "SpCell #0." For example, when L1/L2 signaling indicates, for a serving cell "SCell #2" in an MCG/SCG, that the serving cell is changed to candidate cell #2-1, candidate cell #2-1 becomes a new serving cell "SCell #2." Note that one serving cell may correspond to one HARQ entity, and candidate cells corresponding to the serving cell may correspond to the same HARQ entity (the same may apply to other examples of the present disclosure).

### {Example 2 of Serving Cell Switching}

RRC/MAC CE can configure a global candidate cell ID (for example, cell #0, ..., 8) for each cell group, band, FR, or UE. The global candidate cell ID may indicate serving cell switching to the UE.

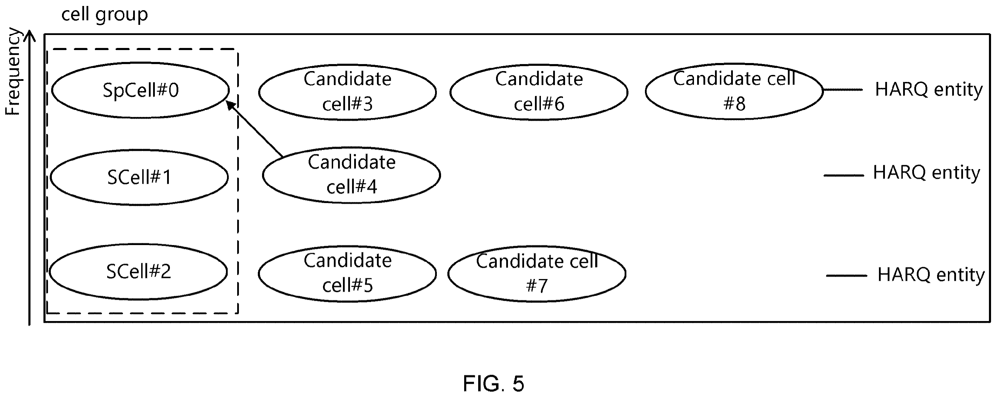

FIG. 5 is a diagram to show example 2 of the serving cell switching. As in FIG. 3A, a pool of a plurality of candidate cells can be configured, and L1/L2 signaling can switch a serving cell to any (activated) candidate cell in the pool. In this case, the configured candidate cell can become either an SpCell or an Sell, based on the L1/L2 signaling.

The UE may receive an indication of a change of the serving cell (in this example, an indication of changing the SpCell to candidate cell 4) by an MAC CE/DCI. Then, indicated candidate cell #4 becomes an SpCell.

### {Example 3 of Serving Cell Switching}

RRC/MAC CE can configure a global candidate cell ID (for example, cell #0-0, #0-1, ..., #2-2) for each cell group, band, FR, or UE. The global candidate cell ID may indicate serving cell switching to the UE. One or more global candidate cell IDs may be associated with each other (for example, associated as one cell group). As a serving cell is changed to a cell with a global candidate cell ID, the UE may change another serving cell to a cell with an associated global candidate cell ID.

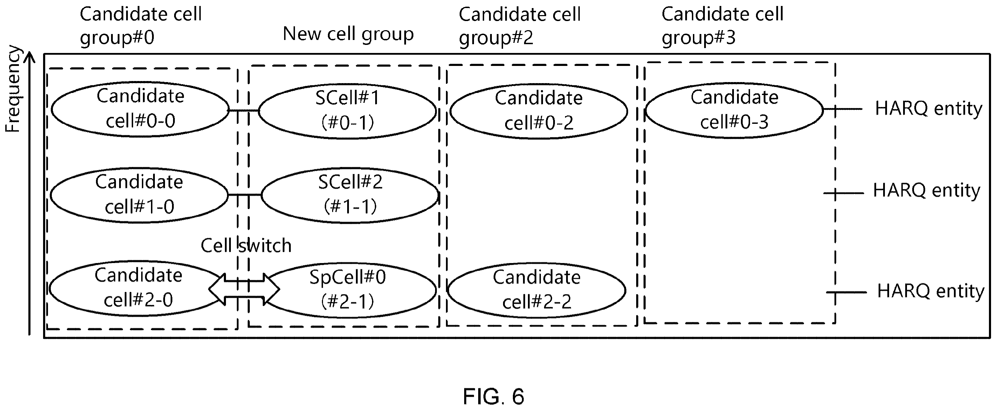

FIG. 6 is a diagram to show example 3 of the serving cell switching. The UE receives an indication of serving cell change (from cell #2-0 to cell #2-1) via a MAC CE/DCI. Indicated cell #2-1 becomes an SpCell in a new cell group. Cells (cell #0-0, cell #1-0) in the same cell group as that for indicated cell #2-1 become Scell #1 and Scell #2. In other words, a serving cell group is switched.

### (CSI Report Configuration)

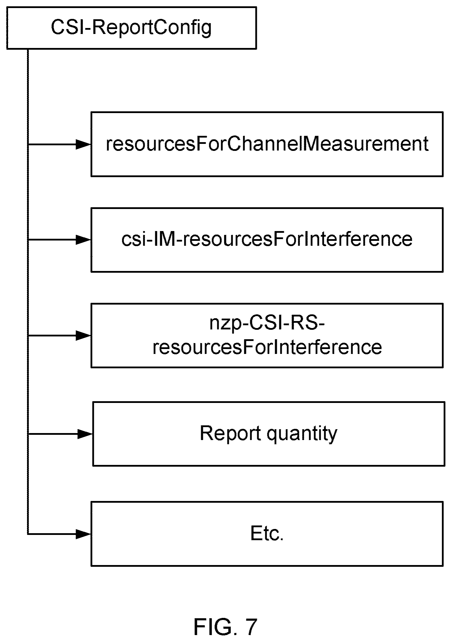

FIG. 7 is a diagram to show an overview of a CSI report configuration of RRC. FIG. 7 illustrates a CSI report configuration of RRC in 3GPP Rel. 17. As illustrated in FIG. 7, the CSI report configuration (CSI-ReportConfig) includes a resource setting for channel measurement (resourcesForChannelMeasurement), CSI-IM resource information for interference measurement (csi-IM-resourcesForInterference), NZP-CSI-RS resource information for interference measurement (nzp-CSI-RS-resourcesForInterference), a report quantity (Report quantity), or the like. "resourceForChannelMeasurement," "csi-IM-resourcesForInterference", "nzp-CSI-RS-resourcesForInterference" correspond to a CSI resource configuration "CSI-ResourceConfig".

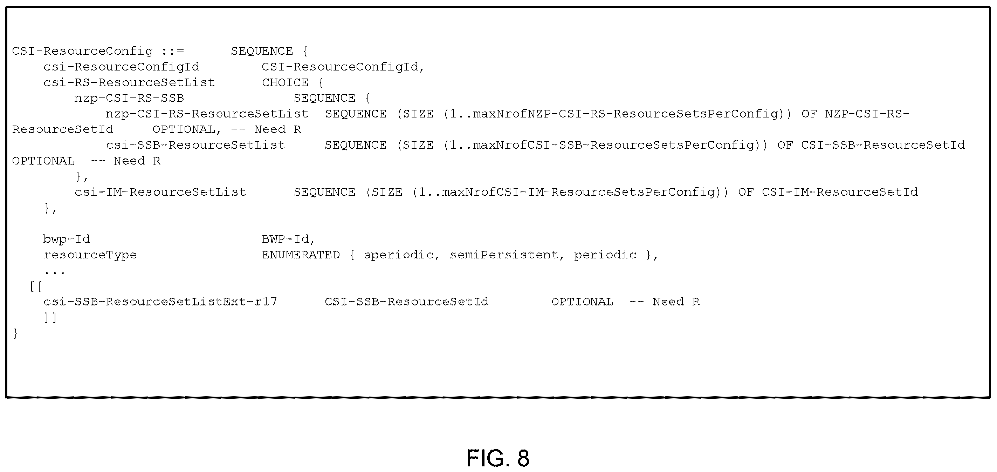

FIG. 8 is a diagram to show a part of CSI resource configuration of Rel. 17. This example is described based on a notation method of Abstract Syntax Notation One (ASN.1). It is to be understood that this is merely an example and is not meant to be a complete description. In this drawing, RRC information elements/parameters with the same names as RRC information elements/parameters already defined in the NR specifications of Rel. 17 or earlier versions (for example, 3GPP TS 38.331) should be understood by those skilled in the art. The same applies to the following similar drawings.

As illustrated in FIG. 8, the CSI resource configuration (CSI-ResourceConfig) includes "csi-SSB-ResourceSetList." csi-SSB-ResourceSetList is a reference destination list of SSB resources used for CSI measurement and reporting in the CSI-RS resource set. "csi-SSB-ResourceSetListExt-r17" is used to add an element to "csi-SSB-ResourceSetList" in a case that the number of report group (nrofReportedGroups-r17) is configured in the CSI report configuration.

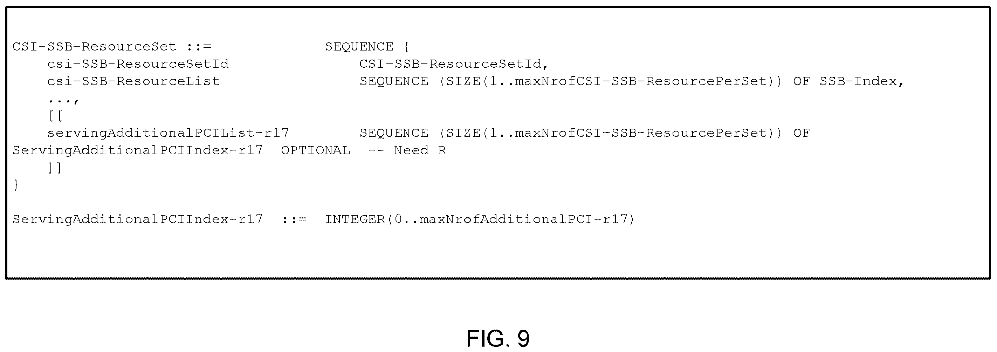

FIG. 9 is a diagram to show a part of CSI-SSB resource set of Rel. 17. As illustrated in FIG. 9, the CSI-SSB-resource set (CSI-SSB-ResourceSet) includes "servingAdditionalPCIList-r17."

"servingAdditionalPCIList-r17" indicates a physical cell ID (PCI) of an SSB included in csi-SSB-ResourceList. When this parameter is present, this list includes the same number of entries as that of csi-SSB-ResourceList. The first entry of this list indicates a value of PCI for the first entry of csi-SSB-ResourceList, the second entry of this list indicates a value of PCI for the second entry of the csi-SSB-ResourceList. This manner also applied to the following entries. For each entry, when the value is zero, a corresponding PCI is a PCI of the serving cell for which this CSI-SSB-ResourceSet is defined. Otherwise (when the value of the entry is other than zero), the value of the entry is additionalPCIIndex-r17 of SSB-MTC-AdditionalPCI-r17 in additionalPCIList-r17 of the serving cell configuration (ServingCellConfig) and the PCI is additionalPCI r17 of this SSB-MTC-AdditionalPCI-r17.

In other words, when the UE is configured with SSB-MTC-AddtionalPCI, the CSI-SSB-resource set (CSI-SSB-ResourceSet) configured for L1-RSRP reporting includes one set of SSB indices and one set of PCI indices, and these SSB indices may be associated with a PCI index. Note that additionalPCIIndex-r17 is an integer equal to or greater than 1 and equal to or less than the maximum number of additional PCIs (maxNrofAdditionalPCI-r17), and the additionalPCI-r17 is a PCI (for example, an integer equal to or greater than 0 and equal to or less than 1007).

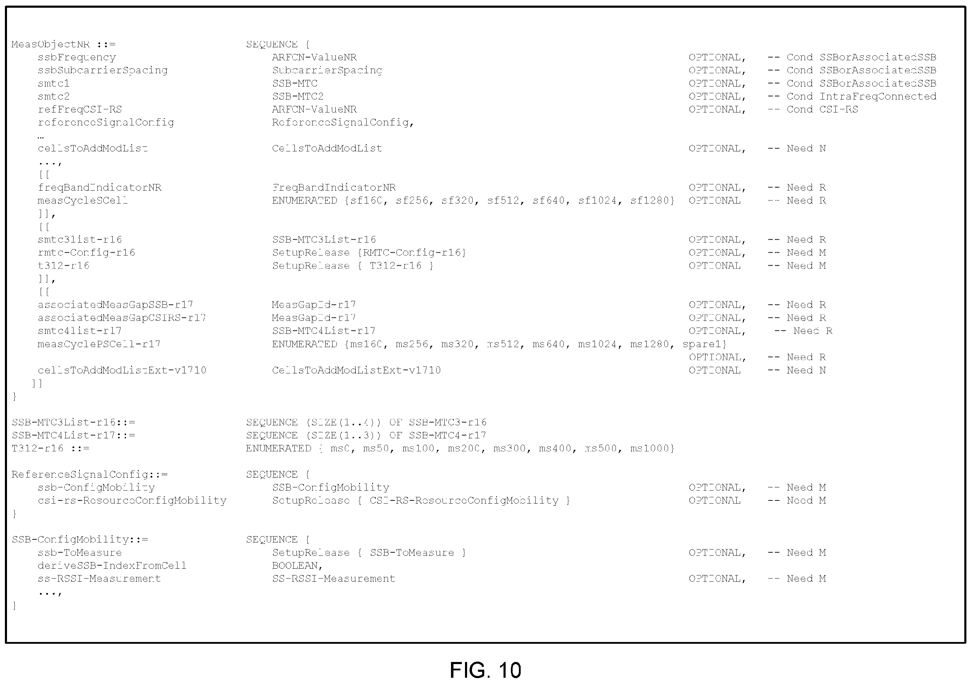

FIG. 10 is a diagram to show a configuration related to L3 measurements/reporting of Rel. 17. associatedMeasGapSSB-r17 indicates an associated measurement gap for SSB measurements identified in ssb_ConfigMobility of a measurement object. When configuring a plurality of MeasObjectNRs with the same SSB frequency, the network configures the same measurement gap ID in this field for each MeasObjectNR. When this field is not present, the associated measurement gap is a gap configured via gapFR1, gapFR2 or gapUE.

associatedMeasGapCSIRS-r17 indicates the associated measurement gap for CSI-RS measurements identified in csi-rs-ResourceConfigMobility of the measurement object. When this field is not present, the associated measurement gap is a gap configured via gapFR1, gapFR2 or gapUE.

### <Enhancement of L1 Measurement Report for L1/L2 Inter-Cell Mobility>

When the RSs (mainly SSBs) of the serving cell and the non-serving cell are configured in the same CSI report configuration (or in the same CSI resource configuration), the UE may report some indicators indicating the serving/non-serving cell in addition to the conventional report contents.

When a new RRC parameter is configured, the UE may report an L3-RSRP value (per beam/cell/multi-beam) in addition to an SSB index/CRI and L1-RSRP/L1-SINR value.

### <Event-Triggered L1 Beam Reporting for L1/L2 Inter-Cell Mobility>

Aperiodic L1 beam reporting may be triggered by reusing one or more existing events for RRM defined in 3GPP TS 38.331. One or more new/separate events may be defined to trigger the aperiodic L1 beam reporting. The L1 beam reporting may be performed with any combination of two or more events as a trigger. The event may be any one of the following events A2 to A6 and I1. In the events A2 to A6, the measurement result may be a measurement result of at least one of RSRP (L1-RSRP/L3-RSRP), RSRQ, and SINR (RS-SINR).
Event A2: The measurement result of the serving cell is worse than a threshold.
Event A3: The measurement result of a neighbor cell (a value obtained by adding an offset to the measurement result) is better than the measurement result of an SpCell (a value obtained by adding an offset to the measurement result).
Event A4: The measurement result of the neighbor cell (a value obtained by adding an offset to the measurement result) is better than a threshold.
Event A5: The measurement result of the SpCell is worse than a first threshold, and the measurement result of a neighbor cell (a value obtained by adding an offset to the measurement result) is better than a second threshold.
Event A6: The measurement result of the neighbor cell (a value obtained by adding an offset to the measurement result) is better than the measurement result of the SCell (a value obtained by adding an offset to the measurement result).
Event I1: The interference measurement result is higher than a threshold.

### (Extension of CSI Reporting)

### <Analysis>

In inter-cell mobility, to support switching of an SpCell/SCell to a candidate cell of an arbitrary frequency, it is preferable to support L1 beam measurement (inter-frequency measurement) of a plurality of frequencies. However, L1 beam measurement/reporting according to the existing CSI report configuration supports only the configuration of an RS of the same frequency as that of the serving cell.

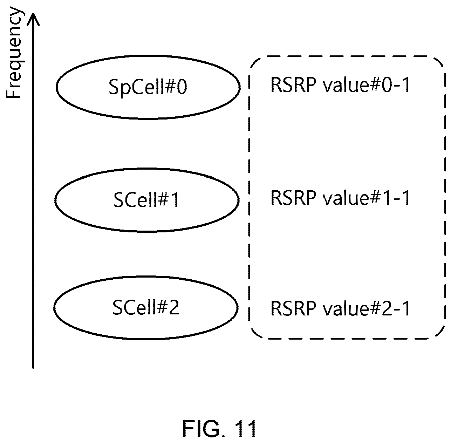

FIG. 11 is a diagram to show an example of RSRP values at a plurality of frequencies. FIG. 11 shows that different RSRP values (RSRP values #0-1, 1-1, and 2-1) are measured for cells (SpCell #0, SCell #1, and SCell #2) of different frequencies. In this case, how a configuration for L1 beam measurement/reporting is performed and how the measurement/reporting are performed will be described.

### <Extension of CSI Measurement/Report Configuration (1)>

To support a frequency configuration for L1 beam measurement (CSI measurement) using a reference signal (RS) (SSB/CSI-RS), extension of a CSI measurement/report configuration will be described. For example, the UE may receive at least one of a channel state information (CSI) report configuration and a CSI resource configuration indicating one or more frequencies, and control CSI measurement and CSI reporting using a reference signal (RS) at the one or more frequencies.

### [Option 1]

At least one of the CSI report configuration (CSI-ReportConfig) and the CSI resource configuration (CSI-ResourceConfig) may include a frequency configuration (for example, an absolute radio-frequency channel number (ARFCN)-ValueNR) corresponding to a reference signal for measurement (for example, SSB/CSI-RS). The ARFCN-ValueNR is used to indicate an ARFCN applied to a downlink, uplink, or bidirectional (TDD) NR global frequency raster. Each CSI report configuration/CSI resource configuration corresponds to one frequency. To support L1 beam measurement/reporting on a plurality of frequencies, a plurality of CSI report configurations are needed. In a case that the ARFCN-ValueNR is not present in the CSI report configuration, this may mean that the frequency is the same as that of the current serving cell configuration.

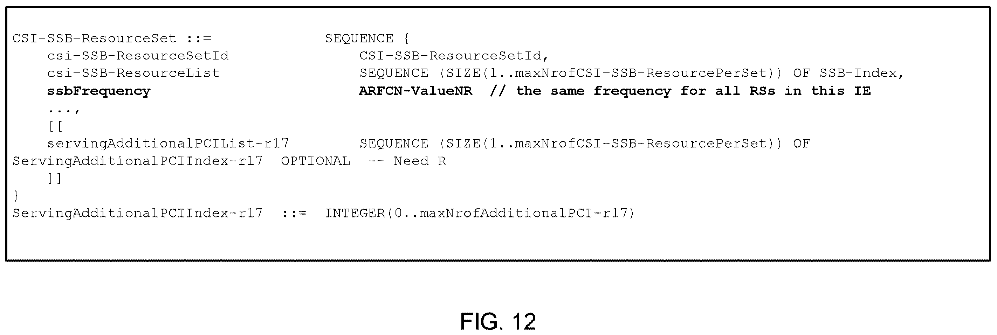

FIG. 12 is a diagram to show an example of CSI-SSB-ResourceSet of option 1 of extension of L1 measurement/report configuration. CSI-SSB-ResourceSet is included in the CSI report configuration and the CSI resource configuration. In FIG. 12, a configuration of SSB frequency (ssbFrequency) corresponding to the ARFCN-ValueNR is included.

### [Option 2]

In at least one of the CSI report configuration and the CSI resource configuration, configuring a different frequencies (for example, ARFCN-ValueNR) for each SSB/CSI-RS/PCI may be supported. Each CSI resource configuration/each CSI report configuration may support L1 beam measurement/reporting on a plurality of frequencies. In this case, comparison of RSRP is intra-frequency comparison, and thus it is also necessary to enrich a beam report quantity configuration and a beam selection rule. The comparison between frequencies is usually performed based on SINR/RSRQ. The SINR/RSRQ will be described below.

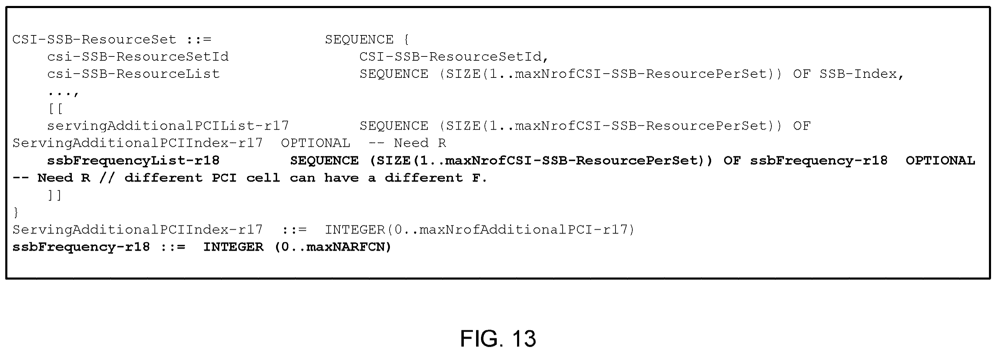

FIG. 13 is a diagram to show an example of CSI-SSB-ResourceSet of option 2 of extension of L1 measurement/report configuration. CSI-SSB-ResourceSet is included in the CSI report configuration and the CSI resource configuration. In FIG. 13, a list of SSB frequencies (ssbFrequencyList-r18) and a configuration of SSB frequencies (ssbFrequency) are included.

The frequency used for beam measurement/reporting may be configured/indicated by MAC CE/DCI. For example, a list of a plurality of frequencies may be configured by RRC (CSI report configuration/CSI resource configuration), and one or more frequencies among the frequencies in the list may be configured/indicated by MAC CE/DCI. The plurality of frequencies may be frequencies of the serving cell and the candidate cell.

According to the extension of L1 measurement/report configuration as described above, one or more frequencies used for beam measurement/reporting can be appropriately configured.

### <Extension of CSI Measurement/Report Configuration (2)>

Next, a case in which the CSI resource configuration/CSI report configuration supports L1 beam (CSI) measurement/reporting in a plurality of frequencies will be described. The UE receives a configuration/indication indicating an RS (SSB/CSI-RS) received in a plurality of frequencies in a CSI resource configuration/CSI report configuration, and measures and reports CSI (L1-RSRP/L1-SINR) using the RS.

The UE may control (transmit) the transmission of one CSI report including both the Reference Signal Received Power of layer 1 (L1-RSRP) and the Signal to Interference plus Noise Ratio of layer 1 (L1-SINR). The UE may control (transmit) the transmission of one CSI report including CSI (L1-RSRP/L1-SINR) measurement results in a plurality of frequencies.

In order for the UE to report both the L1-RSRP and the L1-SINR for a beam index, a report quantity may be configured for both the L1-RSRP and the L1-SINR. The beam index/report result placed at the beginning of the CSI report may correspond to a beam with the largest L1-RSRP/L1-SINR, or may correspond to a beam specified (by a field in the CSI report). Differential quantization may be performed for each of an L1-RSRP value and an L1-SINR value. To select a beam for reporting, the UE may compare pieces of L1-RSRP of frequencies.

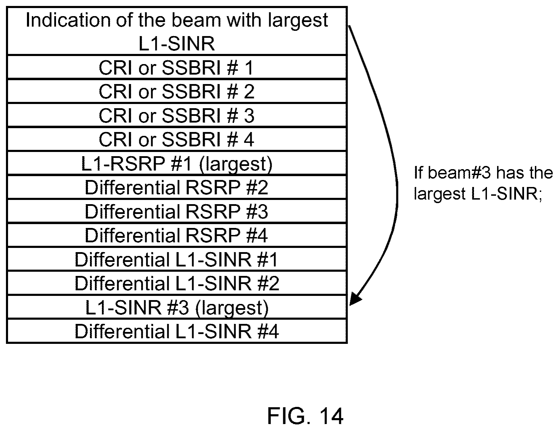

FIG. 14 is a diagram to show an example of CSI report in a plurality of frequencies. In the example of FIG. 14, the CSI report includes an absolute value of the largest L1-RSRP (L1-RSRP #1) and difference values (Differential RSRP #2, #3, and #4) from the absolute value. The CSI report includes the absolute value of the largest L1-SINR (L1-SINR #3) and difference values (Differential RSRP #1, #2, and #4) from the absolute value. The CSI report includes, at the head (first row), a beam indication having the largest L1-SINR. In this example, beam #3 is indicated as a beam with the largest L1-SINR.

When measuring RSs in a plurality of frequencies and selecting a beam to report, the UE may first compare pieces of L1-RSRP of the same frequency and then compare L1-SINRs between different frequencies. The UE may first compare L1-SINRs between different frequencies, and then compare the pieces of L1-RSRP of the same frequency.

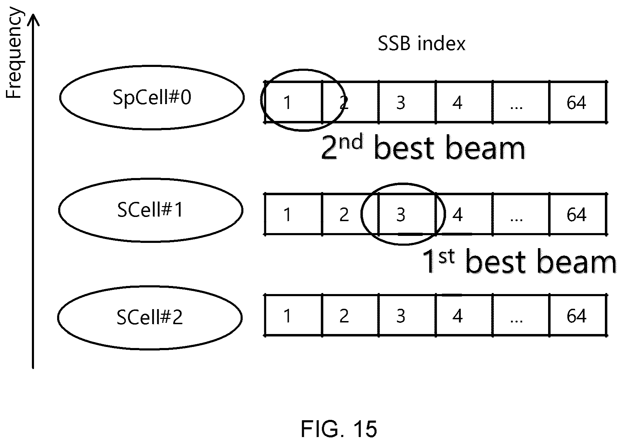

FIG. 15 is a diagram to show an example of a CSI measurement/reporting method in a plurality of frequencies. In the example of FIG. 15, the CSI reporting is performed for cells (SpCell #0, SCell #1, and SCell #2) having different frequencies. In this example, 64 beams (SSBs) are provided per cell, and thus the UE measures L1-RSRP and L1-SINR for 64 x 3 beams. In this example, it is assumed that the L1-RSRP of SSB #3 of SCell #1 is the largest, and the L1-RSRP of SSB #1 of SpCell #0 is the second largest. The UE reports an absolute value of the L1-RSRP of SSB #3 of SCell #1 and a differential value of the L1-RSRP value of SSB #1 of SpCell #0.

For the RS/Cell configured in the CSI report configuration, for example, the SpCell may be configured with all the candidate cells of a serving cell switch in the CSI report configuration at the time of L1 measurement. Then, the NW (base stations) may judge whether to perform cell switching, based on the L1 measurement and the report result.

The CSI report may include information indicating a frequency or a PCI at which an RS of an L1-RSRP/L1-SINR measuring target is transmitted.

As described above, both the L1-RSRP and the L1-SINR can be reported in one CSI report. Moreover, in one CSI report, CSI measurement results (L1-RSRP/L1-SINR) of a plurality of frequencies can be reported. In general, interference varies depending on a frequency (CC), and thus the L1-SINRs have different values. When the above example is applied, the UE can report the L1-SINRs of different frequencies, and thus the NW can grasp, for example, the L1-SINRs of the candidate cells to be switched.

When CSI measurement/reporting in a plurality of frequencies is used for inter-cell CSI measurement/report configuration, the configuration of SSB based Measurement Timing Configuration (SMTC) and Measurement Gap (MG) for a frequency, a PCI, a specific RS of PCI, a UE, and a CSI resource configuration may be added to the CSI report configuration.

### <L3 Measurement/Reporting>

The UE may receive configuration information for measurement/reporting of layer 3 (L3), including a configuration for beam (CSI) measurement/reporting by a reference signal (SSB/CSI-RS) of layer 1 (L1). Then, the UE may control the measurement/reporting in L1 and L3, based on the configuration information. For example, as illustrated in FIG. 10, MeasObjectNR, which is configuration information related to L3 measurement/reporting, may include a frequency configuration for RRM measurement (for example, ARFCN-ValueNR).

### [Option 1]

The configuration information (MeasObjectNR) related to the L3 measurement/reporting may include an indication indicating whether the configuration information is for conventional L3 RRM measurement or for L1 beam measurement. When the L1 beam measurement is indicated, the configuration information may further include some configurations (for example, a report quantity) for the L1 measurement/reporting in the CSI report configuration.

### [Option 2]

One piece of configuration information (MeasObjectNR) related to L3 measurement/reporting may include a plurality of frequencies and a configuration of PCIs/RSs corresponding to different frequencies for L1 beam measurement/reporting. The L1 measurement result and the L3 measurement result may be configured to be reported in separate CSI reports or may be configured to be reported in one CSI report.

### [CSI Reporting (Report)]

The UE may report the L3 measurement result (L3 RSRP value per beam/cell/multi-beam) in an inter-frequency (multi-frequency) L1 beam report (CSI report). The UE may report the L1 measurement result in the report of L3 measurement result. The UE may report the L1 measurement result by using at least one of an RRC IE, a MAC CE, and uplink control information (UCI).

Inter-frequency (multi-frequency) L1 measurement/reporting may be configured as an event trigger. For example, when a specific event occurs, the UE may perform inter-frequency (multi-frequency) L1 measurement/reporting.

As a variation, the UE may receive configuration information (CSI report configuration/CSI resource configuration) for beam measurement/reporting by an SSB/CSI-RS in L1, including a configuration for measurement/reporting in layer 3 (L3).

As described above, it is possible to collectively perform the configuration for layer 1 and layer 3, and thus to suppress an overhead of signaling. When the present embodiment is used for the configuration of inter-cell L1 measurement/reporting, the configuration of SMTC and MG for L3 measurement of MeasObjectNR can be reused for the L1 measurement.

### (L1 Beam Measurement/Reporting When Inter-Frequency Cell Switch is Supported)

When inter-frequency cell switch is supported as illustrated in the example of FIG. 5, it is preferable to perform CSI measurement/reporting between different frequencies, based on one piece of configuration information. Otherwise, a gNB needs to configure L1 beam measurement/reporting of each frequency independently to obtain beam qualities from the cells of different frequencies. Furthermore, in order to compare the beam qualities of different frequencies, reporting of only L1-RSRP or only L1-SINR may be insufficient. In other words, both L1-RSRP and L1-SINR may be needed. By appropriately performing CSI measurement/reporting between different frequencies, it is possible to reduce the overhead of configuration/reporting for obtaining an optimal beam/cell at different frequencies.

Although CSI reporting at a plurality of frequencies is described with reference to FIG. 14 and the like, an example of CSI measurement/reporting (measurement/reporting of L1-RSRP/L1-SINR) at a plurality of frequencies will be described in more detail below.

### <L1-RSRP/L1-SINR Measurement/Reporting (1)>

An example of the CSI resource configuration (CSI-ResourceConfig)/CSI report configuration (CSI-ReportConfig) in a case that the L1 beam measurement/reporting of the cell of one or a plurality of frequencies is supported will be described.

In inter-cell mobility, to support switching of the SpCell/SCell to the candidate cell (or an additional cell, a target cell) of an arbitrary frequency, L1 beam measurements (inter-frequency measurement) of a plurality of frequencies may be supported. The L1 beam measurement/reporting (or CSI measurement/report) for a plurality of frequencies (or frequency domains) may include at least one of the Reference Signal Received Power (L1-RSRP) of layer 1 and the Signal to Interference plus Noise Ratio (L1-SINR) of layer 1.

The UE may receive information related to the CSI resource configuration/CSI report configuration of one or more candidate cells corresponding to different frequencies, and may perform the CSI reporting/beam reporting including at least one of the L1-RSRP and the L1-SINR of each candidate cell, based on the information.

For example, the UE may perform CSI reporting including one of L1-RSRP and L1-SINR or both L1-RSRP and L1-SINR for a certain cell (for example, a candidate cell) or a certain frequency (for example, a frequency corresponding to the candidate cell) (see FIG. 14). FIG. 14 illustrates an example of a case where both L1-RSRP and L1-SINR are included in a certain CSI report (for example, CSI report #n).

The beam selection rule (or a selection rule of CSI to be reported) may be defined in advance in specifications, or may be configured by RRC signaling. The beam selection (or the selection of CSI to be reported) may be performed based on both L1-RSRP and L1-SINR.

The UE may perform the beam selection (or selection of CSI to be reported), based on a specific higher layer parameter. The specific higher layer parameter may be, for example, a report quantity (for example, reportQuantity) included in the CSI report configuration (for example, CSI-ReportConfig). On the other hand, when one of the L1-RSRP and the L1-SINR is configured by the specific higher layer parameter, the UE may perform control so as to include the configured one in the CSI report and not to include the other in the CSI report.

For example, the UE may determine beam selection (or CSI to be reported), based on at least one of the following Option 1-1 to Option 1-3.

### {Option 1-1}

Both configurations of the L1-RSRP and the L1-SINR may be supported by the specific higher layer parameter (for example, reportQuantity) so that both the L1-RSRP and the L1-SINR can be reported for a beam index (or a CSI index).

For example, when reporting of both L1-RSRP and L1-SINR is configured by the specific higher layer parameter, the UE reports CSI including the L1-RSRP and the L1-SINR.

Even when reporting of both L1-RSRP and L1-SINR is configured, CSI reporting quantity may be reduced (or a certain CSI reporting may not be performed) in a case that a specific condition is satisfied. The overhead of the CSI report may be reduced based on at least one of the following option 1-1A and option 1-1B.

### <<Option 1-1A>>

The UE may determine report contents (or the measurement result to be included in the CSI), based on at least one of the measurement result of the L1-RSRP and the measurement result of the L1-SINR. For example, the UE may determine whether to report both (or one of) the L1-RSRP and the L1-SINR, based on at least one of the measurement result of L1-RSRP and the measurement result of L1-SINR. When only one of the L1-RSRP and the L1-SINR is reported, the UE may determine which of the measurement results is to be reported based on the measurement result of L1-RSRP and the measurement result of L1-SINR.

The UE may always include one of the measurement results (for example, L1-RSRP) in the CSI, and may determine whether to report the other measurement result (for example, L1-SINR), based on at least one of the measurement result of L1-RSRP and the measurement result of L1-SINR.

The UE may indicate the measurement result to be reported. For example, when the UE is to report only one of the L1-RSRP and the L1-SINR, the UE may indicate which of the measurement results is to be reported. For example, the measurement result to be reported may be indicated by using a specific field included in the CSI.

### <<Option 1-1B>>

The UE may report both the L1-RSRP and the L1-SINR for a specific beam/cell and report only one of the L1-RSRP and the L1-SINR for other beams/cells (or the remaining beams/cells). In the present disclosure, the specific beam/cell may be the best beam/cell, the highest-quality beam/cell, the beam/cell with the largest L1 RSRS, or the beam/cell with the largest L1-SINR. The beam may be a reference signal resource index (for example, CRI/SSBRI).

In option 1-1A/option 1-1B, when both/only one of the L1-RSRP and the L1-SINR is selected (or reported), the UE may autonomously determine report contents, or the report contents may be determined based on a specific rule. The specific rule may be, for example, a rule that a measurement result exceeding a threshold configured/defined for L1-RSRP and a threshold configured/defined for L1-SINR is to be reported. The threshold for L1-RSRP/threshold for L1-SINR may be configured separately by higher layer signaling.

In this way, even when reporting of both the L1-RSRP and the L1-SINR is configured/defined, it is possible to suppress an increase in overhead of CSI reporting by allowing/supporting reporting of only one of the L1-RSRP and the L1-SINR, based on a specific condition.

### {Option 1-2}

Configurations/indications of only one of the L1-RSRP and the L1-SINR may be supported by a specific higher layer parameter (for example, reportQuantity). The UE controls to report the configured/indicated measurement result (one of L1-RSRP and L1-SINR) .

### {Option 1-3}

Configuration/indication of only one of the L1-RSRP and the L1-SINR may be supported by a specific higher layer parameter (for example, reportQuantity)/DCI. The UE may report both the L1-RSRP and the L1-SINR for a specific beam/cell, and report a measurement result (only one of the L1-RSRP and the L1-SINR) configured/indicated by a higher layer parameter/DCI for other beams/cells (or the remaining beams/cells).

The specific cell may be determined autonomously by the UE or may be configured by a higher layer parameter. Alternatively, when the measurement result for a CSI report (L1-RSRP or L1-SINR) that is not configured by a higher layer exceeds a threshold defined/configured in advance, the CSI report that is not configured may be reported.

In this way, even when reporting of only one of the L1-RSRP and the L1-SINR is configured/defined, allowing/supporting reporting of both the L1-RSRP and the L1-SINR for a specific cell enables detailed CSI reporting for a specific beam/cell.

### [UE Capability]

When L1 beam (or CSI) measurement/reporting of cells of a plurality of frequencies are supported by a CSI resource configuration (CSI-ResourceConfig)/CSI report configuration (CSI-ReportConfig), UE capability related to the number of cells (or the number of beams, the number of pieces of CSI) to be configured/reported may be introduced. For example, the UE capability related to the number of cells (or the number of beams, the number of pieces of CSI) configured/reported for each CSI resource configuration/each CSI report configuration/each frequency may be supported. The UE capability related to the number of cells (or the number of beams, the number of pieces of CSI) configured/reported over a CSI resource configuration/CSI report configuration/frequency may be supported.

### <L1-RSRP/L1-SINR Measurement/Reporting (2)>

Another example of the CSI resource configuration (CSI-ResourceConfig)/CSI report configuration (CSI-ReportConfig) in a case that the L1 beam measurement/reporting of the cell of one or a plurality of frequencies is supported will be described. The following examples may be applied in combination with the above-described L1-RSRP/L1-SINR measurement/reporting (1).

When the L1 beam measurements/reporting of a cell of a certain frequency is supported by the CSI resource configuration (CSI-ResourceConfig)/CSI report configuration (CSI-ReportConfig), the CSI resource configuration/CSI report configuration may include information related to the frequency (for example, frequency configuration). The L1 beam measurement/reporting may be interpreted as CSI measurement/reporting.

The frequency configuration may be a frequency configuration (for example, an absolute radio-frequency channel number (ARFCN)-ValueNR) corresponding to a reference signal for measurement (for example, an SSB/CSI-RS). The ARFCN-ValueNR is used to indicate an ARFCN applied to a downlink, uplink, or bidirectional (TDD) NR global frequency raster. Each CSI report configuration/CSI resource configuration corresponds to one frequency. To support L1 beam measurement/reporting on a plurality of frequencies, a plurality of CSI report configurations are needed. In a case that the ARFCN-ValueNR is not present in the CSI report configuration, this may mean that the frequency is the same as that of the current serving cell configuration.

A frequency configuration indicating a frequency at which CSI measurement/reporting is performed and report quantity (for example, reportQuantity) indicating contents (for example, L1-RSRP, L1-SINR) for performing CSI measurement/reporting may be configured for the UE. The configuration described in the first embodiment may be applied to the configuration/reporting of the report quantity.

For example, one CSI report configuration (or each CSI report configuration) may include a frequency configuration and report quantity (for example, reportQuantity). A configuration in which both measurement/reporting of the L1-RSRP and the L1-SINR are configured for a certain cell (or frequency) and measurement/reporting of only one of the L1-RSRP and the L1-SINR is configured for another cell (or frequency) may be supported. The UE controls the CSI measurement/CSI reporting, based on the frequency configuration and the report quantity (for example, reportQuantity).

For example, the UE may determine beam selection (or CSI to be reported), based on at least one of the following Option 2-1 to Option 2-3.

### {Option 2-1}

Both configurations of the L1-RSRP and the L1-SINR may be supported by the specific higher layer parameter (for example, reportQuantity) so that both the L1-RSRP and the L1-SINR can be reported for a beam index (or a CSI index) of a certain cell (or a certain frequency).

For example, when both the L1-RSRP and the L1-SINR are configured for a certain cell or frequency by a specific higher layer parameter (for example, frequency configuration and report quantity (for example, reportQuantity)), the UE reports the CSI including the L1-RSRP and the L1-SINR corresponding to the frequency.

Alternatively, when a specific condition is satisfied, CSI report quantity may be reduced (or a certain CSI reporting may not be performed). The overhead of the CSI report may be reduced based on at least one of the following option 2-1A and option 2-1B.

### <<Option 2-1A>>

The UE may determine report contents (or the measurement result to be included in the CSI), based on at least one of the measurement result of the L1-RSRP and the measurement result of the L1-SINR. For example, the UE may determine whether to report both the L1-RSRP and the L1-SINR, based on at least one of the measurement result of L1-RSRP and the measurement result of L1-SINR. When only one of the L1-RSRP and the L1-SINR is reported, the UE may determine which of the measurement results is to be reported based on the measurement result of L1-RSRP and the measurement result of L1-SINR.

Alternatively, the UE may always include one of the measurement results (for example, L1-RSRP) in the CSI, and may determine whether to report the other measurement result (for example, L1-SINR), based on at least one of the measurement result of L1-RSRP and the measurement result of L1-SINR.

The UE may indicate the measurement result to be reported. For example, when the UE is to report only one of the L1-RSRP and the L1-SINR, the UE may indicate which of the measurement results is to be reported. For example, the measurement result to be reported may be indicated by using a specific field included in the CSI.

### <<Option 2-1B>>

The UE may report both the L1-RSRP and the L1-SINR for a specific beam/cell and report only one of the L1-RSRP and the L1-SINR for other beams/cells (or the remaining beams/cells). In the present disclosure, the specific beam/cell may be the best beam/cell, the highest-quality beam/cell, the beam/cell with the largest L1 RSRS, or the beam/cell with the largest L1-SINR.

In option 2-1A/option 2-1B, when both/only one of the L1-RSRP and the L1-SINR is selected (or reported), the UE may autonomously determine report contents, or the report contents may be determined based on a specific rule. The specific rule may be, for example, a rule that a measurement result exceeding a threshold configured/defined for L1-RSRP and a threshold configured/defined for L1-SINR is to be reported. The threshold for L1-RSRP/threshold for L1-SINR may be configured separately by higher layer signaling.

In this way, even when reporting of both the L1-RSRP and the L1-SINR is configured/defined, it is possible to suppress an increase in overhead of CSI reporting by allowing/supporting reporting of only one of the L1-RSRP and the L1-SINR, based on a specific condition.

### {Option 2-2}

Configuration/indication of only one of the L1-RSRP and the L1-SINR may be supported for a certain cell or frequency by a specific higher layer parameter (for example, frequency configuration and report quantity (for example, reportQuantity)/DCI. The UE controls to report the configured/indicated measurement result (one of L1-RSRP and L1-SINR) .

### {Option 2-3}

Configuration/indication of only one of the L1-RSRP and the L1-SINR may be supported for a certain cell or frequency by a specific higher layer parameter (for example, frequency configuration and report quantity (for example, reportQuantity)/DCI. The UE may report both the L1-RSRP and the L1-SINR for a specific beam/cell/frequency, and report a measurement result (only one of the L1-RSRP and the L1-SINR) configured/indicated by a higher layer parameter/DCI for other beams/cells/frequencies (or the remaining beams/cells).

The specific cell may be determined autonomously by the UE or may be configured by a higher layer parameter. Alternatively, when the measurement result for a CSI report (L1-RSRP or L1-SINR) that is not configured by a higher layer exceeds a threshold defined/configured in advance, the CSI report that is not configured may be reported.

In this way, even when reporting of only one of the L1-RSRP and the L1-SINR is configured/defined, allowing/supporting reporting of both the L1-RSRP and the L1-SINR for a specific cell enables detailed CSI reporting for a specific beam/cell.

### (Analysis)

As described above, it is under study that a serving cell is switched to a cell (additional cell/candidate cell) of a PCI different from the serving cell by signaling of at least one of layer 1 and layer 2 (L1/L2 inter-cell mobility).

Furthermore, for L1/L2 inter-cell mobility, it is under study that the UE reports the CSI report as described above.

However, when contents of the CSI report received from the UE includes only measurement results related to a beam of only a serving cell or only a candidate cell, a network cannot obtain measurement results of a switch candidate or a switch source, and thus it is difficult to judge cell switching. In this way, unless an appropriate CSI report is reported, there may cause issues such as improvement of communication throughput being suppressed and deterioration in communication quality.

Thus, the inventors of the present invention came up with the idea of a method for appropriately performing0 CSI reporting related to a plurality of cells.

Embodiments according to the present disclosure will be described in detail with reference to the drawings as follows. The radio communication methods according to respective embodiments may each be employed individually, or may be employed in combination.

In the present disclosure, "A/B" and "at least one of A or B" may be interchangeably interpreted. In the present disclosure, "A/B/C" may mean "at least one of A, B, or C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, another message (message from a core network, such as a positioning protocol (for example, NR Positioning Protocol A (NRPPa)/LTE Positioning Protocol (LPP)) message), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, a cell group, a serving cell group, a master cell group (MCG), and a secondary cell group (SCG) may be interchangeably interpreted. The serving cell may be included in a cell group. L1/L2, L1/L2 signaling, and DCI/MAC CE may be interchangeably interpreted. The serving cell may be interpreted as a cell transmitting a PDSCH. The candidate cell may mean a candidate cell that is to serve as a serving cell due to L1/L2 inter-cell mobility.

In the present disclosure, a cell, a PCI, a serving cell, a source serving cell, a source cell, a CC, a BWP, a BWP in CC, and a band may be interchangeably interpreted. In the present disclosure, a cell, a PCI, a cell with an additional PCI, an additional cell, another cell, a non-serving cell, a cell with a different PCI, a candidate cell, a candidate serving cell, a cell with a PCI different from a PCI of the current serving cell, another serving cell, and a target cell may be interchangeably interpreted. In the present disclosure, switch, change, and update may be interchangeably interpreted. The serving cell may be interpreted as a serving cell before switching or a serving cell after switching.

In the present disclosure, the PCI, any indicator indicating a cell (for example, a Cell Global Identity (CGI), an NR Cell Global Identity (NCGI), an NR Cell Identity (NCI)), and the like may be interchangeably interpreted.

In the present disclosure, beam measurement/reporting, L1 beam measurement/reporting, L1 measurement/reporting, and CSI measurement/reporting may be interchangeably interpreted. L1 may indicate at least one of the L1-RSRP and the L1-SINR. The RS may be at least one of a CSI-RS and an SSB. The L1-RSRP and the L1-SINR may be interchangeably interpreted. An RS, a beam, an RS of a beam, a beam index, an SSB, an SSB index, an SSBRI (SS/PBCH Block Resource Indicator), a CSI-RS index, and a CRI (CSI-RS Resource Indicator) may be interchangeably interpreted.

In the present disclosure, a CSI report and a beam report may be interchangeably interpreted. In the present disclosure, a report related to a beam, information related to a beam, a CSI field related to a beam, and the like may be interchangeably interpreted. In the present disclosure, a measurement result and at least one of L1-RSRP, L1-SINR, index related to other power/quality, and the like may be interchangeably interpreted.

In the present disclosure, an event and a condition may be interchangeably interpreted. In the present disclosure, a cell and a frequency may be interchangeably interpreted.

Note that, in the following description of embodiments, it is assumed that a serving cell means an SpCell that is a source cell for L1/L2 mobility, but the serving cell may be interpreted as at least one of an SpCell and an SCell. The following embodiments may be implemented when the UE is configured for multi-TRP, or may be implemented regardless of the configuration for multi-TRP (even when such configuration is not performed).

### (Radio Communication Method)

Hereinafter, an embodiment related to at least one of the following cases A to E will be described:
- Case A: one CSI report includes a report (for example, beam index/measurement result) related to at least one beam of a serving cell,
- Case B: one CSI report includes a report related to both the beam of the serving cell and a beam(s) of a candidate cell(s),
- Case C: one CSI report includes a report related to a beam of at least one candidate cell,
- Case D: one CSI report includes only a report related to a beam of a candidate cell, and
- Case E: there is no restriction on a report related to a beam of a serving cell/candidate cell included in one CSI report (one CSI report includes a report related to both or one of a beam of a serving cell and a beam of a candidate cell).

Note that a UE may be configured with an RRC parameter that (a CSI report based on) certain CSI report configuration information (CSI-ReportConfig) corresponds to at least one of the above cases A to E. The UE may determine to include a report related to the beam of the serving cell/candidate cell in a CSI report, based on the RRC parameter.

### <First Embodiment>

A first embodiment relates to a method for ensuring that a UE includes a report related to a beam of at least one serving cell in one CSI report. The first embodiment is preferred for case A.

In the first embodiment, a configuration for reporting (a configuration for each cell/frequency, a configuration across cells/frequencies) may be configured for the UE by using CSI report configuration information. For example, the total number of RSs to be reported (hereinafter also represented as X) among RSs configured for the CSI report configuration information is configured for the UE. Note that in the present disclosure, the number of RSs to be configured may be referred to as the number of configurations/the number of constraints.

The UE may determine (select) an RS(s) reported by one CSI report according to at least one of Embodiments 1.1 to 1.5:
- Embodiment 1.1: select (X - 1) RSs from a serving cell/candidate cell and additionally select one RS from the serving cell,
- Embodiment 1.2: select X RSs from the serving cell/candidate cell and additionally select one RS from the serving cell,
- Embodiment 1.3: select (X - 1) RSs from the candidate cell and additionally select one RS from the serving cell,
- Embodiment 1.4: select the X RSs from the candidate cell and additionally select one RS from the serving cell, and
- Embodiment 1.5: select X RSs from the serving cell/candidate cell.

Note that in Embodiments 1.1 to 1.5, the "serving cell" and "only serving cell" may be interchangeably interpreted, and the "candidate cell" and "only candidate cell" may be interchangeably interpreted. In Embodiments 1.1 to 1.4, "additionally select" may mean that the selection is performed after the selection of X - 1 (or X) RSs, but the selection timing may be in random order.

In Embodiments 1.1/1.2, the selection of X - 1 (or X) RSs from the serving cell/candidate cell may be based on a specific beam selection method. In the present disclosure, the specific beam selection method may be, for example, a beam selection method/beam selection rule in the above-described L1-RSRP/L1-SINR measurement/report (1) or (2), or may be a beam selection method/beam selection rule obtained by extending/modifying these (for example, L1-RSRP/L1-SINR are compared for RSs of a plurality of frequencies to select a beam). In Embodiment 1.1/1.2, one RS selected from the serving cell may be an RS that is different from the X - 1 (or X) RSs and that corresponds to the RS of the serving cell.

In Embodiments 1.3/1.4, the selection of X - 1 (or X) RSs from the serving cell/candidate cell may be based on the specific beam selection method. In Embodiment 1.3/1.4, the one RS selected from the serving cell may be, for example, an RS having the largest RSRP/SINR among the RSs of the serving cell.

In Embodiment 1.5, the selection of X RSs from the serving cell/candidate cell may be based on the specific beam selection method. When the X RSs selected based on the specific beam selection method include the RS of the serving cell, the UE may transmit the CSI report for the X RSs. When the X RSs selected based on the specific beam selection method include no RS of the serving cell, the UE may replace at least one RS (for example, the RS having the smallest RSRP/SINR) among the X RSs with the RS of the serving cell to update the RS, and transmit the CSI report for the updated X RSs.

In Embodiments 1.1/1.3/1.5, the UE/network may recognize that the number of RSs reported in one CSI report is X. In Embodiments 1.2/1.4, the UE/network may recognize that the number of RSs reported in one CSI report is X + 1. In other words, X in Embodiment 1.2/1.4 may mean the number of RSs reported by the serving cell/candidate cell excluding one RS reported by the serving cell.

The UE may generate a CSI report including a field related to the determined X (or X + 1) RSs and transmit the CSI report to the network.

Note that, in the first embodiment, the number of RSs selected from the serving cell or the maximum number of RSs may be determined in advance or may be configured by higher layer signaling.

In the first embodiment, a configuration for reporting (configuration for each cell/frequency, configuration over cells/frequencies) may be applied only to the candidate cell, or may be applied to all the cells (all the configured cells) including the serving cell and the candidate cell.

According to the first embodiment described above, the report related to the beam of the serving cell can be reliably notified by the CSI report, and thus the network can suitably determine L1/L2, based on the CSI report.

### <Variation of First Embodiment>

In the first embodiment, frequencies are not particularly distinguished for the total number of RSs X to be reported. In a variation of the first embodiment, the UE may be configured with at least one of the number of RSs to be reported (hereinafter also referred to as Y) for each frequency (for example, frequency index (ARFCN-ValueNR)) and the number of frequencies to be reported (hereinafter also referred to as Z). Note that at least one of these may be determined in advance in a specification.

The UE may determine the RSs for the same frequency as the serving cell reported by one CSI report according to at least one of Embodiments 1.1' to 1.5':
- Embodiment 1.1': select Y - 1 RSs from serving cell/candidate cell of the same frequency as the serving cell and additionally select one RS from the serving cell,
- Embodiment 1.2': select Y RSs from the serving cell/candidate cell of the same frequency as the serving cell and additionally select one RS from the serving cell,
- Embodiment 1.3': select Y - 1 RSs from the candidate cell of the same frequency as the serving cell and additionally select one RS from the serving cell,
- Embodiment 1.4': select Y RSs from the candidate cell of the same frequency as the serving cell and additionally select one RS from the serving cell, and
- Embodiment 1.5': select Y RSs from the serving cell/candidate cell of the same frequency as the serving cell.

The determination of the RSs for the same frequency as the serving cell in each of Embodiments 1.1' to 1.5' may be implemented according to alternative interpretation of above-described Embodiments 1.1 to 1.5, in which the serving cell/candidate cell is interpreted as the serving cell/candidate cell for the same frequency as the serving cell and X is interpreted as Y.

The UE may determine the RSs for the frequencies (= Z-1 frequencies) different from the serving cell to be reported by one CSI report. The UE may select Y RSs for each of these frequencies, based on a specific beam selection method.

In Embodiments 1.1'/1.3'/1.5', the UE/network may recognize that the number of RSs reported in one CSI report is Y * Z. In Embodiment 1.2'/1.4', the UE/network may recognize that the number of RSs reported in one CSI report is Y * Z + 1.

The UE may generate a CSI report including a field related to the determined Y * Z (or Y * Z + 1) RSs and transmit the CSI report to the network.

### <Variation 2 of First Embodiment>

Variation 2 of the first embodiment relates to a method for ensuring that the UE includes a report related to a beam of at least one candidate cell in one CSI report. Variation 2 of the first embodiment is preferable for case C.

Variation 2 of the first embodiment may be implemented according to alternative interpretation of the above-described first embodiment, in which the serving cell is interpreted as the candidate cell and the candidate cell is interpreted as the serving cell.

### <Second Embodiment>

A second embodiment relates to a method in which a UE includes, in one CSI report, a report related to one or both of a beam of a serving cell and a beam of a candidate cell. The second embodiment is preferred for case A/B.

In the second embodiment, the UE may be separately configured with a configuration for a serving cell for reporting (a configuration for each cell/frequency, a configuration over cells/frequencies) and a configuration for a candidate cell for reporting (a configuration for each cell/frequency, a configuration over cells/frequencies). For example, the UE may be reported of, among RSs configured for CSI report configuration information, at least one of the number of RSs for the serving cell to be reported (hereinafter also referred to as Xₛ) and the number of RSs for the candidate cell to be reported (hereinafter also referred to as X_{c}). Note that at least one of these may be determined in advance in a specification.

The total number of RSs reported by one CSI report corresponds to Xₛ + X_{c}. Xₛ and X_{c} may be the same value or may be different values. Note that Xₛ may be equal to or less than X_{c}, or may be equal to or more than X_{c}. At least one of Xₛ and X_{c} may be 0. When both Xₛ and X_{c} are 0, the UE may not include a report related to both the beam of the serving cell and the beam of the candidate cell in the corresponding CSI report, or may not transmit the CSI report.

The UE may select, based on a specific beam selection method, Xₛ RSs of the serving cell to be reported by one CSI report from the RSs of the serving cell. The UE may select, based on the specific beam selection method, X_{c} RSs of the candidate cell to be reported by the same CSI report from the RSs of the candidate cell.

Note that, regarding Xₛ, the number of RSs for each serving cell may be configured for the UE, or the number of RSs over the serving cells may be configured for the UE. In the former case, for example, when a first serving cell and a second serving cell are configured for the UE, the number of RSs of the first serving cell to be reported and the number of RSs of the second serving cell to be reported may be configured for the UE. The number of RSs of the first serving cell to be reported and the number of RSs of the second serving cell to be reported may be configured to different values, and the sum of the numbers may correspond to Xₛ. Note that information directly indicating the value of Xₛ itself may be configured or may not be configured.

For X_{c}, the number of RSs for each cell/frequency may be configured for the UE, and the number of RSs over cells/frequencies may be configured for the UE. For example, a configuration (the number of RSs to be reported) for the candidate cell having the same frequency as the serving cell and a configuration (the number of RSs to be reported) for the candidate cell having a different frequency from the serving cell may be configured differently (or to different values). Note that information directly indicating the value of X_{c} itself may be configured or may not be configured.

According to the second embodiment described above, the report related to the beam of the serving cell can be notified by the CSI report, the network can suitably perform determination of L1/L2, based on the CSI report.

### <Third Embodiment>

A third embodiment relates to contents of a CSI report.

As described above, in Rel-17 NR, the correspondence between an SSB index and a PCI index (and thus an additional PCI) is shared between a network and a UE by configuring a CSI-SSB-resource set (CSI-SSB-ResourceSet) including servingAdditionalPCIList-r17 for the UE. The network can recognize whether the corresponding measurement result is obtained in measurement for a serving cell or a candidate cell (additional cell), based on the SSB index included in the CSI report.

On the other hand, in above-described Cases A to E, it is assumed that all the measurement results (for example, L1-RSRP) included in the CSI report are associated with only the serving cell, only the candidate cell, or both the cells.

In the third embodiment, the UE may be configured with one or both of the correspondence relationship between the SSB index and the PCI index and the correspondence relationship between the PCI index and the additional PCI, or may not be configured with one or both of the correspondence relationships. When the UE is not configured with one or both of the correspondence relationships, the UE may include, in the CSI report, information (field) indicating a PCI index or a PCI (or an additional PCI) corresponding to a report (for example, a beam index/measurement result) related to a beam.

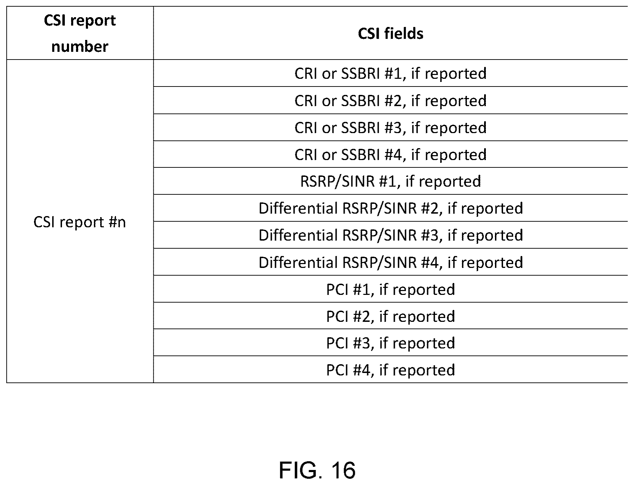

FIG. 16 is a diagram to show an example of contents of the CSI report according to the third embodiment. In this example, a field (PCI #I) indicating the PCI corresponding to i-th (i = 1 to 4) measurement result is included in the CSI report.

Note that the UE may arrange the measurement result related to the RS of a specific cell to a specific location. In this case, a field indicating a PCI for the specific cell may not be included in the CSI report. For example, as described in Embodiments 1.1 to 1.4, when the measurement result related to the RS of the serving cell additionally selected is arranged at a specific location (for example, fourth location), the UE may not include a field of PCI #4 in the CSI report.

In the CSI report, a field for the serving cell and a field for the candidate cell may be distinguished. For example, when Xₛ and X_{c} described above in the second embodiment are configured for the UE, the CSI report may include fields related to each beam, for example, in any of the following orders:
- A, B, C, D,
- C, D, A, B,
- A, C, B, D, and
- C, A, D, B.

Here, A denotes the best beam among the Xₛ RSs, B denotes the remaining beams among the Xₛ RSs, C denotes the best beam among the X_{c} RSs, and D denotes the remaining beams among the X_{c} RSs.

Note that the CSI report may include fields related to the beams in an order with A, B, C, and D arbitrarily interchanged.

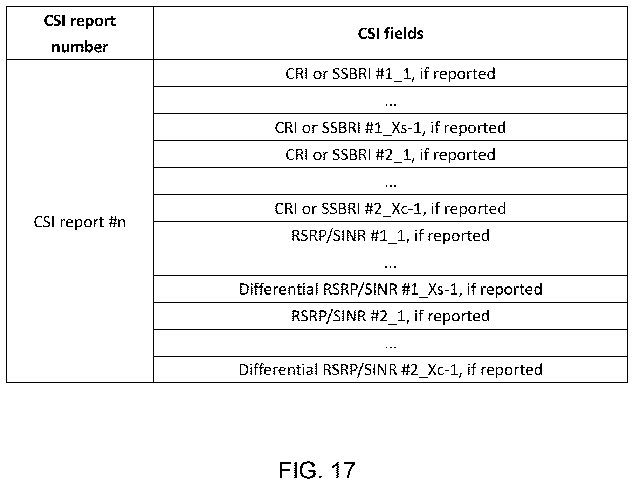

FIG. 17 is a diagram to show an example of contents of the CSI report according to the third embodiment. In this example, the CSI report including the fields related to the beams in the order of A, B, C, and D is illustrated. Note that a field corresponding to #1_i (i = 1 to Xₛ - 1) is a field related to the beam of the serving cell, and a field corresponding to #2_j (j = 1 to X_{c} - 1) is a field related to the beam of the candidate cell. In this example, the field related to the beam of the serving cell is arranged on a preceding side of the field related to the beam of the candidate cell (at the top).

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control information for at least one of the embodiments above,
- supporting of CSI report related to RSs of a plurality of frequencies,
- supporting of CSI report related to RSs of a plurality of cells,
- supporting of CSI report including both L1-RSRP and L1-SINR,
- supporting of index recreation,
- supporting of CSI report of a candidate cell,
- supporting of cases A/B/C/D/E,
- the maximum number of RSs of a serving cell that can be reported (in one CSI report), and
- the maximum number of RSs of a candidate cell that can be reported (in one CSI report).

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating the above-described X/Y/Z/Xₛ/X_{c}, or may be any RRC parameter for a specific release (for example, Rel. 18/19), or the like.

In a case where the UE does not support at least one of the specific UE capability or is not configured with the specific information, the UE may apply, for example, Rel-15/16 operation.

### (Supplementary Notes)

Regarding one embodiment of the present disclosure, the following supplementary notes of the invention will be given.

### {Supplementary Note 1}

A terminal including:
a control section that generates a channel state information (CSI) report including at least one field indicating a measurement result of a reference signal related to a serving cell; and
a transmitting section that transmits the CSI report.

### {Supplementary Note 2}

The terminal according to supplementary note 1, wherein the control section selects one or more reference signals from the serving cell and a candidate cell, and selects a reference signal different from the one or more reference signals as a reference signal related to the serving cell.

### {Supplementary Note 3}

The terminal according to supplementary note 1 or 2, wherein the control section selects one or more reference signals from the serving cell and a candidate cell having a same frequency as the serving cell, and selects a reference signal different from the one or more reference signals as a reference signal related to the serving cell.

### {Supplementary Note 4}

The terminal according to any one of supplementary notes 1 to 3, wherein the control section arranges a field related to the serving cell on a preceding side to a field related to a candidate cell in the CSI report.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

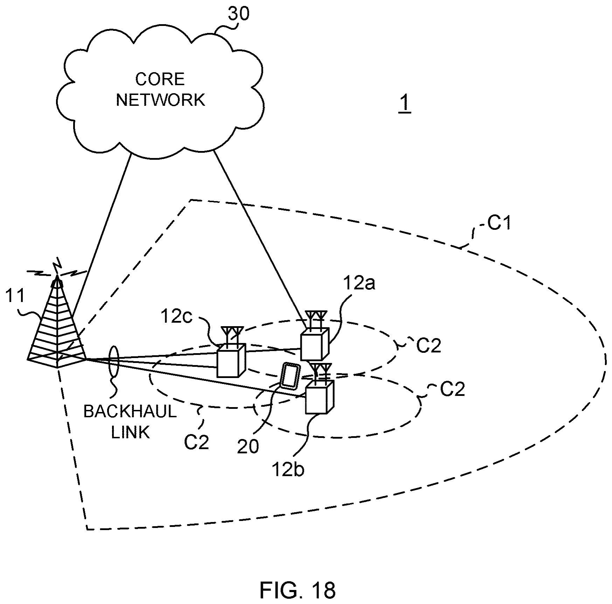

FIG. 18 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) or dual connectivity (DC) using a plurality of component carriers (CCs).

Each CC may be included in at least one of a first frequency band (Frequency Range 1 (FR1)) or a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) or frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), or the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) or the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH or the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), or scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) or a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

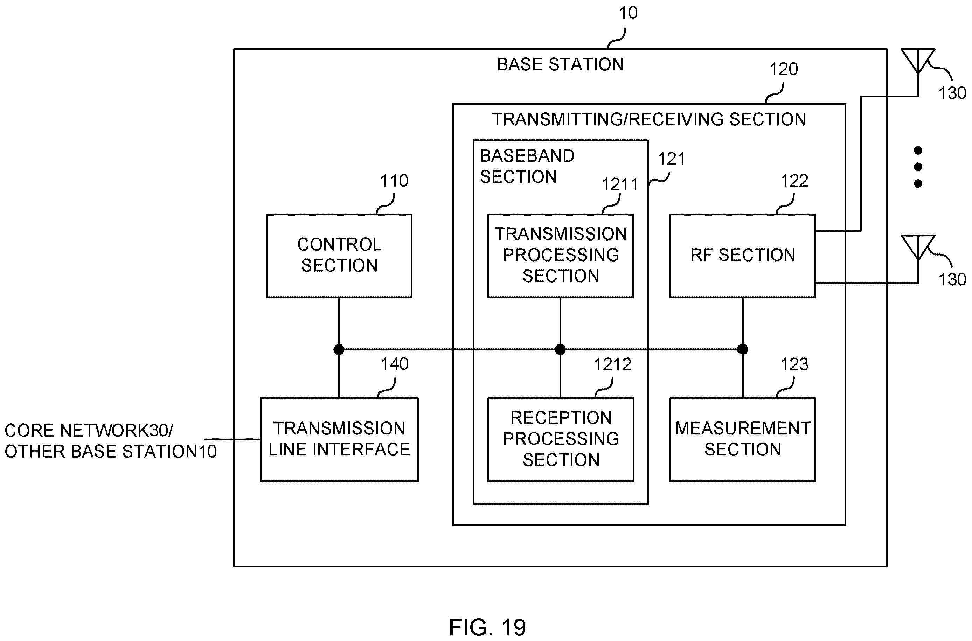

FIG. 19 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam or a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, or the communication path interface 140.

The transmitting/receiving section 120 may transmit, to a user terminal 20, configuration information for generating a channel state information (CSI) report including at least one field indicating a measurement result (for example, L1-RSRP/SINR) of a reference signal (RS) related to a serving cell. The configuration information may be CSI report configuration information, or may be information indicating X/Y/Z/Xₛ/X_{c} described above. The transmitting/receiving section 120 may receive the CSI report from the user terminal 20.

### (User Terminal)

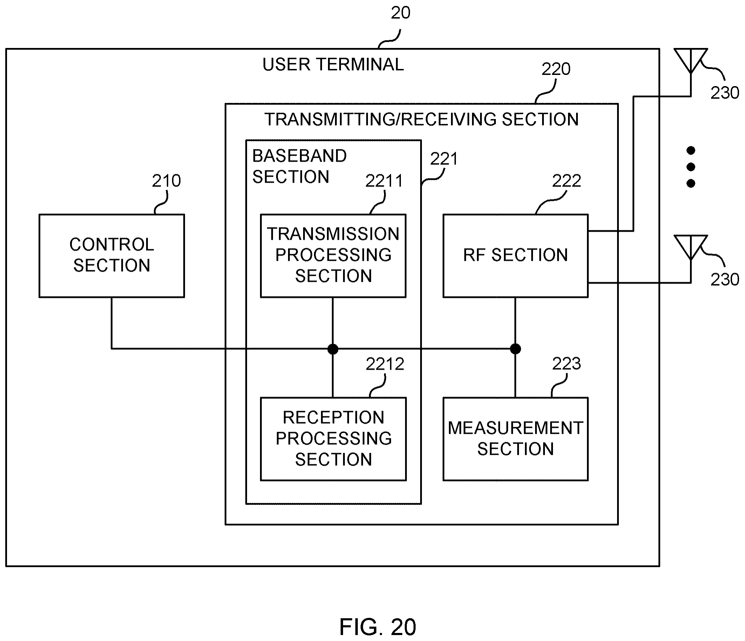

FIG. 20 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam or a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI computation, based on a channel measurement resource. The channel measurement resource may be, for example, a non-zero power (NZP) CSI-RS resource. The measurement section 223 may derive interference measurement for CSI computation, based on an interference measurement resource. The interference measurement resource may be at least one of an NZP CSI-RS resource for interference measurement, a CSI-interference measurement (IM) resource, or the like. Note that the CSI-IM may be referred to as CSI-interference management (IM), and may be interpreted as a zero power (ZP) CSI-RS, and vice versa. Note that, in the present disclosure, CSI-RS, NZP CSI-RS, ZP CSI-RS, CSI-IM, CSI-SSB, and the like may be interchangeably interpreted.

Note that the transmitting section and the receiving section of the user terminal 20 in the present disclosure may be constituted with at least one of the transmitting/receiving section 220 or the transmitting/receiving antennas 230.

The control section 210 may generate a channel state information (CSI) report including at least one field indicating a measurement result of a reference signal related to a serving cell. The transmitting/receiving section 220 may transmit the CSI report.

The control section 210 may select one or more reference signals from the serving cell and a candidate cell, and select a reference signal different from the one or more reference signals as a reference signal related to the serving cell (refer to, for example, Embodiments 1.1/1.2 above).

The control section 210 may select one or more reference signals from the serving cell and a candidate cell having a same frequency as the serving cell, and select a reference signal different from the one or more reference signals as a reference signal related to the serving cell (refer to, for example, Embodiments 1.1'/1.2' above).

The control section 210 may arrange a field related to the serving cell on a preceding side to a field related to a candidate cell in the CSI report (refer to, for example, third embodiment above).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

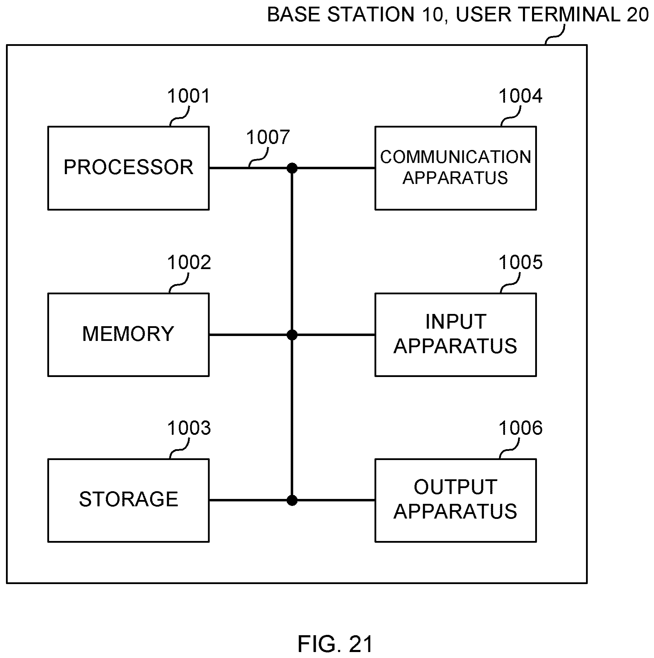

For example, a base station, a user terminal, and so on according to one embodiment of the present disclosure may function as a computer that executes the processes of the radio communication method of the present disclosure. FIG. 21 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

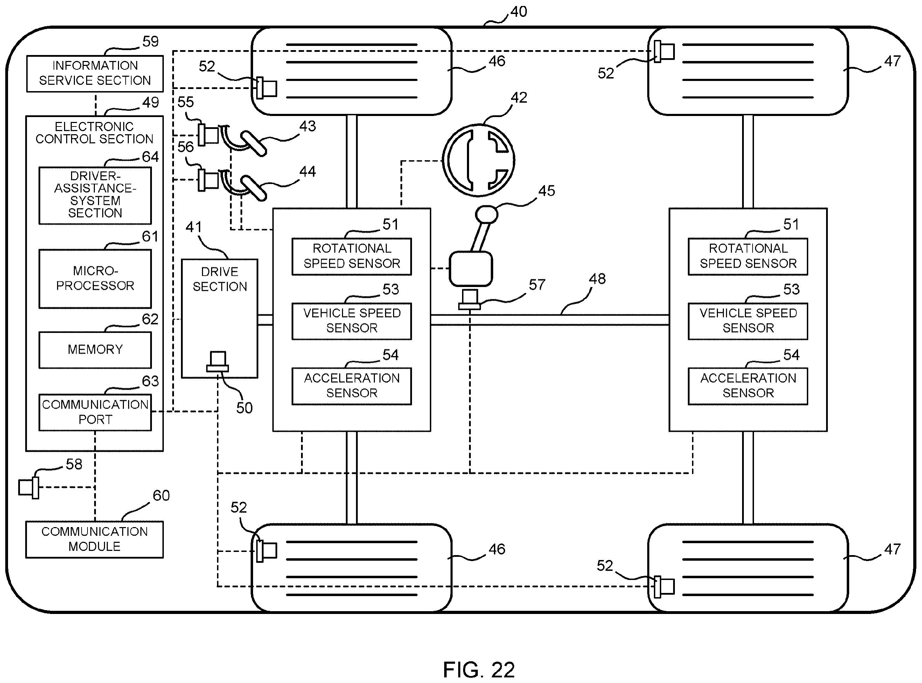

FIG. 22 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a control section that generates a channel state information (CSI) report including at least one field indicating a measurement result of a reference signal related to a serving cell; and
a transmitting section that transmits the CSI report.

2. The terminal according to claim 1, wherein
the control section selects one or more reference signals from the serving cell and a candidate cell, and selects a reference signal different from the one or more reference signals as a reference signal related to the serving cell.

3. The terminal according to claim 1, wherein
the control section selects one or more reference signals from the serving cell and a candidate cell having a same frequency as the serving cell, and selects a reference signal different from the one or more reference signals as a reference signal related to the serving cell.

4. The terminal according to claim 1, wherein
the control section arranges a field related to the serving cell on a preceding side to a field related to a candidate cell in the CSI report.

5. A radio communication method for a terminal, the radio communication method comprising:
generating a channel state information (CSI) report including at least one field indicating a measurement result of a reference signal related to a serving cell; and
transmitting the CSI report.

6. A base station comprising:
a transmitting section that transmits, to a terminal, configuration information for generating a channel state information (CSI) report including at least one field indicating a measurement result of a reference signal related to a serving cell; and
a receiving section that receives the CSI report.
